# EUROPÄISCHE PATENTSCHRIFT

(11) **EP 1 809 395 B1**
(45) Veröffentlichungstag und Bekanntmachung des Hinweises auf die Patenterteilung: **13.08.2008**
(21) Anmeldenummer: 04790099.8
(22) Anmeldetag: 02.10.2004
(51) Int. Cl.: A63C 9/00, A43B 5/04

(54) **KOMBINATION AUS SKISCHUHEN UND SKI**
COMBINATION OF SKI BOOT AND SKI
COMBINAISON DE CHAUSSURES DE SKI ET DE SKIS

(43) Veröffentlichungstag der Anmeldung: 25.07.2007
(73) Patentinhaber: Tyrolia Technology GmbH, 2320 Schwechat (AT)
(72) Erfinder: BRANDT, Helmut, A-2333 Leopoldsdorf (AT)
(74) Vertreter: Vinazzer, Edith
(86) Internationale Anmeldenummer: PCT/EP2004/011038
(87) Internationale Veröffentlichungsnummer: WO 2006/037357

(56) Entgegenhaltungen:
- DE-A1- 19 936 519
- US-A- 5 273 305
- US-A- 5 498 017
- US-A1- 2002 092 182
- US-B1- 6 471 235

## Beschreibung

Die Erfindung betrifft eine Kombination aus Skischuhen verschiedener Größen und aus Ski mit montierten, einen Vorderbacken und einen Fersenbacken aufweisenden Bindungen, deren gegenseitiger Abstand mittels zumindest einer am Ski angeordneten Führungseinrichtung veränderbar und gegenüber dem Ski festlegbar ist.

Leihskistationen sind üblicher Weise je nach Bedarf mit einer Anzahl von Skiern unterschiedlicher Typen und unterschiedlicher Längen mit vormontierten Skibindungen ausgerüstet. Skischuhe unterschiedlicher Größen vervollständigen das Angebot. Die Skibindungen sind mittels geeigneter Mechanismen derart am Ski angeordnet, dass der gegenseitige Abstand der beiden Bindungsbacken in einem relativ weiten Bereich zur Anpassung der Bindung an Skischuhe unterschiedlicher Längen einstellbar ist. Dies bedingt seitens des Personals der Leihskistationen einen zeitintensiven Einstell- und Verstellaufwand. Leihskistationen benötigen daher auch gut geschultes Personal.

US-A- 5498017 offenbart eine Kombination aus Skischuhen und aus Ski mit montierten Bindungen.

Hier setzt nun die Erfindung ein, welcher die Aufgabe zu Grunde liegt, eine für ein Leihsystem besonders geeignete Kombination aus Ski mit vormontierten Bindungen und Skischuhen unterschiedlicher Größen zur Verfügung zu stellen, welches den Einstell- und Verstellaufwand reduziert und den Kunden sowie dem Personal der Leihstation eine einfache, zeitsparende und übersichtliche Abwicklung gewährleistet.

Gelöst wird die gestellte Aufgabe erfindungsgemäß durch eine Kombination wie in Anspruch 1 offenbart.

Erfindungsgemäße Kombinationen sind für Leihstationen optimal geeignet. Die Erfindung erlaubt eine simple Anpassung der Bindung an die Schuhe aus den vorgesehenen Skischuhtypen. Dies erleichtert dem Personal der Leihstation die Abwicklung und hat für den Kunden vor allem den Vorteil der Zeitersparnis beim Ausleihen der Ausrüstung.

Gemäß einer bevorzugten Ausführungsform der Erfindung sind die Markierungen Farbmarkierungen, wobei die Skischuhtypen einer bestimmten Sohlenlänge farblich derart markiert sind, dass diese Farbe mit der Farbe der Markierung(en) an der Führungseinrichtung der Bindung übereinstimmt, die dem passenden gegenseitigen Abstand der Backen entspricht.

Unter die Erfindung fällt eine Vielzahl von Kombinationen, von welchen einige besonders vorteilhaft sind. Dabei geht es vor allem auch darum, bei einer guten Übersichtlichkeit möglichst alle gewünschten Skischuhgrößen zur Verfügung stellen zu können. In diesem Zusammenhang ist es von Vorteil, wenn eine erfindungsgemäße Kombination mindestens drei Skischuhtypen aufweist und zu jedem Skischuhtyp mehrere unterschiedlich große Schalen, die jedoch übereinstimmende Sohlenlängen aufweisen, gehören.

Bei drei oder mehr unterschiedlichen Skischuhtypen ist es von Vorteil, wenn zu jedem Skischuhtyp zwei verschieden große Schalen gehören. In diesem Fall lässt sich die erfindungsgemäße Kombination besonders einfach derart ausführen, dass sämtliche üblicherweise gewünschten Skischuhgrößen zur Verfügung gestellt werden können.

Dazu werden beispielsweise von jeder Schalengröße eines Skischuhtyps mehrere, insbesondere zwei, Schalen zur Verfügung gestellt, wobei in jede dieser Schalen nur ein Innenschuh einer bestimmten Größe einsetzbar ist. Diese gleich großen Schalen werden insbesondere so ausgeführt, dass in die eine Schale ein Innenschuh einer bestimmten Größe passt und in die andere dieser Schalen ein Innenschuh der nächstfolgenden bzw. benachbarten Größe einsetzbar ist. Es gibt daher Schalen gleicher Größe, die sich in ihrem Innenraum unterscheiden. Dies kann auf einfache Weise dadurch erreicht werden, dass beispielsweise von zwei Schalen gleicher Größe eine durch eine eingelegte Einlage oder dergleichen an einen Innenschuh einer kleineren Größe angepasst ist. Erfindungsgemäße Kombinationen sind daher sehr vielfältig auslegbar. Selbstverständlich werden in den Leihstationen Skischuhschalen und Innenschuhe Paarweise in der entsprechenden Anzahl und Größe zur Verfügung gestellt.

Dem Kunden ist es vor allem wichtig, möglichst schnell die für ihn passende Kombination aus Skischuh und Ski ausleihen zu können. Es ist daher von Vorteil, wenn die Skischuhtypen sowie deren Schalen und auch die Innenschuhe sowie die Ski mittels entsprechender Codes oder Markierungen und dergleichen einander zuordenbar sind.

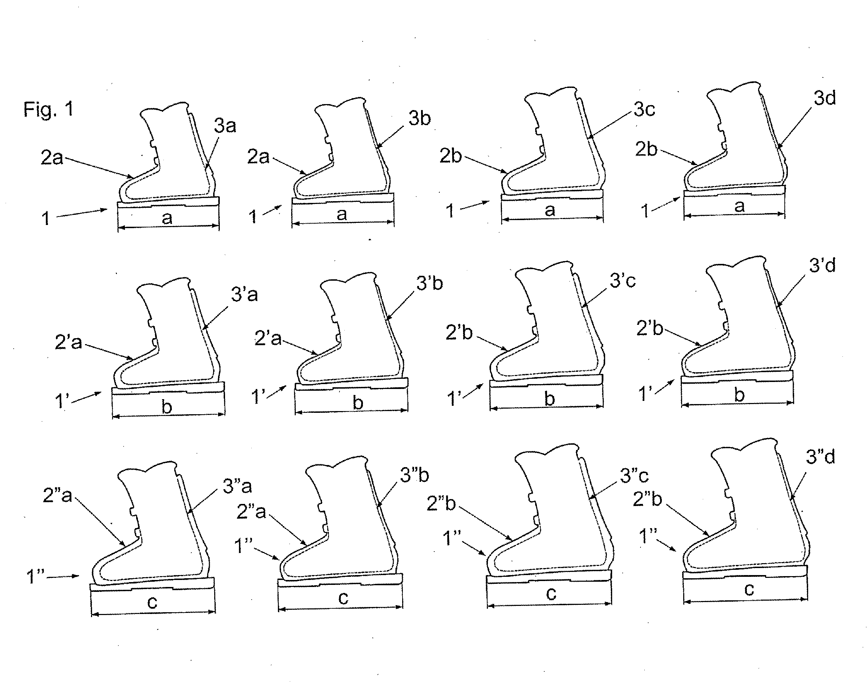

Weitere Merkmale, Vorteile und Einzelheiten der Erfindung werden anhand der Zeichnung, die schematisch ein Ausführungsbeispiel darstellt, näher beschrieben. Dabei zeigen
Fig. 1 zu einer Ausführung einer erfindungsgemäßen Kombination gehörende Skischuhe und
Fig. 2a bis 2c einen zu einer Ausführung eines erfindungsgemäßen Leihsystems gehörenden Ski.

Wesentliche Bestandteile einer erfindungsgemäßen Kombination aus Skischuhen und Ski mit Bindung für ein Leihsystems zum Alpinskifahren sind mindestens zwei, bei der dargestellten Ausführung drei verschiedene Skischuhtypen 1, 1', 1". Zu einem Skischuhtyp 1, 1', 1" gehören jeweils zwei kleinere äußere Schalen 2a, 2'a, 2"a, und zwei größere äußere Schalen 2b, 2'b, 2"b . Die zu jedem Schuhtyp 1, 1', 1" gehörenden Schalen 2a, 2b und 2'a, 2'b sowie 2"a, 2"b haben jeweils eine übereinstimmende Sohlenlänge a, b, c. Die beiden äußeren Schalen 2a sind zumindest außen gleich groß, insbesondere sind sie übereinstimmend ausgeführt. Dies gilt auch für die weiteren paarweise gleich großen äußeren Schalen 2b, 2'a, 2'b, 2"a, 2"b.

Die beiden gleich großen Schalen 2a des Schuhtyps 1 sind innen derart ausgeführt, dass die eine Schale 2a beispielsweise einen Innenschuh 3a der Größe 23 und die zugehörige Halbgröße, die zweite Schale 2a einen Innenschuh 3b der Größe 24 und die zugehörige Halbgröße aufnehmen kann. Dazu kann in der einen, für den kleineren Innenschuh der Größe 23 vorgesehenen Schale 2a zumindest eine Einlage eingebracht sein, um den Innenraum der Schale 2a an den kleineren . Innenschuh anzupassen. Analoges gilt für die beiden äußeren Schalen 2b und die in diese einsetzbaren Innenschuhe 3c, 3d, die beispielsweise den Schuhgrößen 25 und 26 entsprechen.

Die den Innenraum einer Schale verkleinernde und an einen Innenschuh bestimmter Größe anpassende Einlage kann ein- oder mehrteilig sein und wird insbesondere aus Kunststoff gefertigt. Bevorzugt ist ferner eine Ausführung, bei der die Einlage den Zehenbereich des Innenraumes und die an die Sohle anschließenden seitlichen Bereiche der Innenseiten der Schale auskleidet.

Sämtliche zum Skischuhtyp 1' gehörenden äußeren Schalen 2'a und 2'b weisen die Sohlenlänge b auf und sind, wie bereits erwähnt, unterschiedlich groß. In die eine äußere Schale 2'a, welche, wie ebenfalls erwähnt, innen beispielsweise über eine Einlage entsprechend angepasst ist, kann beispielsweise ein Innenschuh 3'a der Schuhgröße 27 und ein solcher der zugehörigen Halbgröße eingesetzt werden, in die zweite äußere Schale 2'a ein Innenschuh 3'b der Größe 28 und der zugehörigen Halbgröße. Analoges gilt für die beiden Schalen 2'b und die in ihnen einsetzbaren Innenschuhe 3'c, 3'd, die den Schuhgrößen 29 und 30 entsprechen können. Auch für die Skischuhe des Schuhtyps 1" gilt Analoges bezüglich der Paare von äußeren Schalen 2"a, 2"b sowie bezüglich der in diese einsetzbaren Innenschuhe 3"a bis 3"d, die den Schuhgrößen 31 bis 34 entsprechen können.

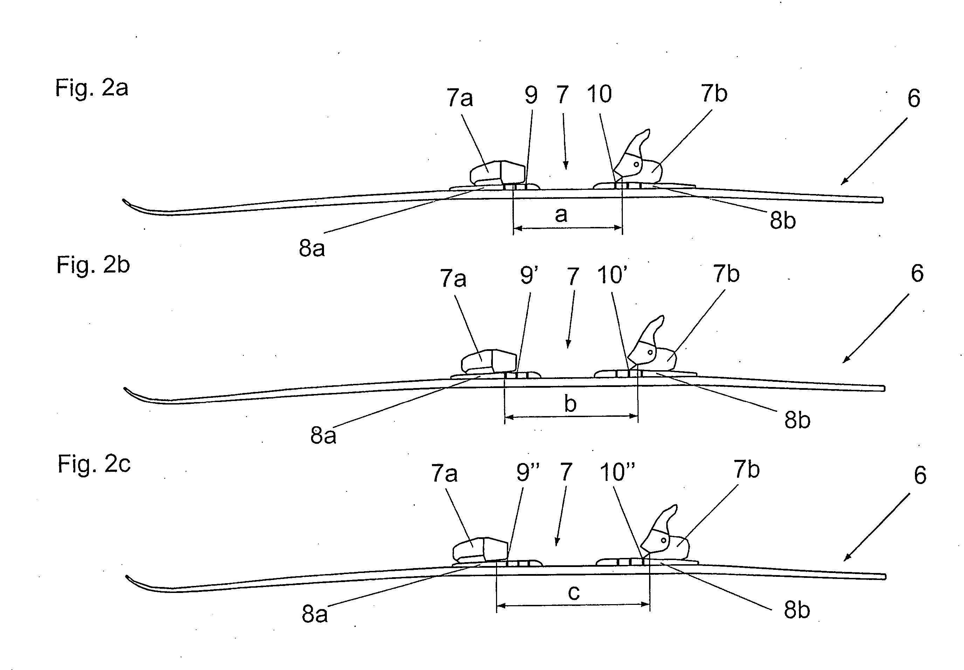

Fig. 2a bis 2c zeigen einen Ski 6, welcher zu einem Skipaar gehört, mit einer montierten Skibindung 7 bestehend jeweils aus einem Vorderbacken 7a und einem Fersenbacken 7b. Der Vorderbacken 7a ist auf einer auf der Oberseite des Skis 6 angeordneten, beispielsweise angeschraubten oder auf sonstige Weise mit dem Ski 6 verbundenen, Führungseinrichtung 8a, beispielsweise einer Führungsschiene, positioniert und mittels einer nicht dargestellten, auf herkömmliche Weise ausführbaren Verstell- und Rasteinrichtung in Skilängsrichtung in unterschiedlichen Lagen festlegbar. Analoges gilbt für den Fersenbacken 7b und die Führungseinrichtung 8b, auf welcher der Fersenbacken 7b angeordnet ist. An der Führungseinrichtung 8a sind Markierungen 9, 9', 9" und an der Führungseinrichtung 8b Markierungen 10 ,10', 10" vorgesehen. Eine Positionierung und Verrastung des Vorderbackens 7a gemäß der Markierung 9 und des Fersenbackens 7b gemäß der Markierung 10 entspricht einem gegenseitigen Abstand der Backen 7a, 7b, welcher zum Einsetzen eines Skischuhtyps 1 der Sohlenlänge a geeignet ist. Eine Positionierung und Verrastung der Backen 7a, 7b gemäß den Markierungen 9', 10' entspricht einem Abstand, welcher ein Einsetzen eines Skischuhtyps 1' der Länge b, eine Positionierung und Verrastung der Backen 7a, 7b gemäß den Markierungen 9" und 10" gestattet ein Einsetzen eines Skischuhtyps 1" der Länge c.

Die Markierungen können farbige Elemente sein, beispielsweise Markierungsstriche an der Führungseinrichtung oder einem anderen Bindungsteil, welcher gegenüber dem Ski ortsfest verbleibt, wobei auch die Skischuhe die entsprechend dem gegenseitigen Abstand der Backen 7a, 7b eingesetzt werden können, entsprechend farbig gekennzeichnet sein können. Die farbige Kennzeichnung der Skischuhe kann beliebig, beispielsweise am Schuhspitzenbereich, erfolgen und auch ein eigenes Teil sein. So können etwa rote Markierungen 9, 10 mit einer roten Markierung von Schuhen der Sohlenlänge a die Zuordnung auf simple Weise ermöglichen.

Alternativ zu einer Verstellmöglichkeit beider Bindungsbacken 7a, 7b kann auch vorgesehen sein, lediglich einen der Backen 7a, 7b, vorzugsweise den Fersenbacken 7b, in Skilängsrichtung verstellbar anzuordnen. Bezüglich der Markierungen zur Einstellung bzw. Anpassung des Abstandes der Backen 7a, 7b an die Sohlenlängen a, b, c der Skischuhtypen 1, 1', 1" gilt Analoges zu obigen Ausführungen.

Bei einer weiteren, nicht dargestellten Ausführung kann vorgesehen sein, dass einer der Backen 7a, 7b, vorzugsweise der Fersenbacken 7b, gegenüber der Führungseinrichtung 8b verstell- und festlegbar ist, der Vorderbacken 7a kann mit dem Fersenbacken 7b bewegungsgekoppelt sein, beispielsweise über mit einem Zahnrad kämmende Zahnstangen, sodass eine Veränderung der Position des Fersenbackens 7b eine synchrone Veränderung der Position des Vorderbackens 7a zur Folge hat. Anordnung und Ausführung der Markierungen kann analog zur Ausführung gemäß Fig. 2a bis 2c erfolgen. Bei einer Abwandlung diese Ausführung kann auch vorgesehen sein, dass die Rasteinrichtung zur Festlegung des gegenseitigen Abstand 7a, 7b im Bereich zwischen den Backen angeordnet ist.

Erfindungsgemäße Kombinationen für Leihsysteme umfassen zumindest zwei, vorzugsweise drei, oder auch mehr als drei Skischuhtypen und / oder pro Skischuhtyp mehr als zwei unterschiedlich große Schalen gleicher Sohlenlänge. Erwähnt sei ferner, dass auch unterschiedliche Systeme von Skibindungen im Rahmen eines erfindungsgemäßen Leihsystems verwendbar sind, solange entsprechende Bindungsanschlussbereiche für die Skischuhschalen vorhanden sind.

Von besonderem Vorteil ist, dass die Erfindung es gestattet, bei Bindungen zusätzlich herkömmliche Verstellmöglichkeiten für beliebige Skischuhlängen vorzusehen, wobei die zu Skischuhtypen gemäß der Erfindung passenden Einstellungen des gegenseitigen Abstandes der Backen, wie oben beschrieben, besonders gekennzeichnet sind.

## Patentansprüche

1. Kombination aus Skischuhen verschiedener Größen und aus Ski mit montierten, einen Vorderbacken und einen Fersenbacken aufweisenden Bindungen, deren gegenseitiger Abstand mittels zumindest einer am Ski angeordneten Führungseinrichtung veränderbar und gegenüber dem Ski festlegbar ist, und mit Skischuhe, welche zu zumindest zwei Skischuhtypen (1, 1', 1") gehören, die sich in der Sohlenlänge (a, b, c) voneinander unterscheiden, und mit am Ski derart verstellbar angeordnete Bindungsbacken (7a, 7b), dass ihr gegenseitiger Abstand an die unterschiedlichen Sohlenlängen (a, b, c) anpassbar ist, wobei Markierungen an den Skischuhtypen (1, 1', 1") und Markierungen (9, 9', 9", 10, 10', 10") an der Führungseinrichtung (8a, 8b) der Bindung eine eindeutige Zuordnung der Sohlenlänge (a, b, c) an den passenden Backenabstand gestatten, **dadurch gekennzeichnet daß** zu jedem Skischuhtyp einer bestimmten Sohlenlänge(a, b, c) mindestens zwei Schalen unterschiedlicher Größe vorgesehen sind, in welche jeweils die Innenschuhe (3a bis 3d, 3'a bis 3'd, 3"a bis 3"d) einer Schuhgröße und der zugehörigen Halbgröße einsetzbar sind.

2. Kombination nach Anspruch 1, **dadurch gekennzeichnet, dass** sie mindestens drei Skischuhtypen (1, 1', 1") aufweist.

3. Kombination nach einem der Anspruch 1 bis 2, **dadurch gekennzeichnet, dass** zu jedem Skischuhtyp (1, 1', 1 ") mehrere unterschiedlich große Schalen (2a, 2b; 2'a, 2'b; 2"a, 2"b) gleicher Sohlenlänge (a, b, c) gehören.

4. Kombination nach Anspruch 3, **dadurch gekennzeichnet, dass** zu jedem Skischuhtyp (1, 1', 1") zwei verschieden große Schalen (2a, 2b; 2'a, 2'b; 2"a, 2"b) gehören.

5. Kombination nach einem der Ansprüche 1 bis 4, **dadurch gekennzeichnet, dass** von jeder Schalengröße mehrere, insbesondere zwei, Schalen (2a, 2b; 2'a, 2'b; 2"a, 2"b) vorhanden sind, die sich innen derart voneinander unterscheiden, dass jeweils ein Innenschuh (3a, 3b; 3c, 3d; 3'a, 3'b; 3'c 3'd; 3"a, 3"b; 3"c, 3"d) einer bestimmten Größe einsetzbar ist.

6. Kombination nach Anspruch 5, **dadurch gekennzeichnet, dass** in die eine Schale (2a, 2b; 2'a, 2'b; 2"a, 2"b) der Schalen gleicher Größe ein Innenschuh (3a, 3b; 3c, 3d; 3'a, 3'b; 3'c 3'd; 3"a, 3"b; 3"c, 3"d) einer bestimmten Größe passt und in die andere Schale ein Innenschuh (3a, 3b; 3c, 3d; 3'a, 3'b; 3'c 3'd; 3"a, 3"b; 3"c, 3"d) der nächsten bzw. benachbarten Größe passt.

7. Kombination nach einem der Ansprüche 1 bis, 6, **dadurch gekennzeichnet, dass** zumindest eine der Schalen (2a, 2b; 2'a, 2'b; 2"a, 2"b) gleicher Größe durch eine eingelegte Einlage oder dergleichen an einen Innenschuh (3a, 3b; 3c, 3d; 3'a, 3'b; 3'c 3'd; 3"a, 3"b; 3"c, 3"d) kleinerer Größe angepasst ist.

8. Kombination nach einem der Ansprüche 1 bis 7, **dadurch gekennzeichnet, dass** die Skischuhtypen (1,1', 1 ") sowie deren Schalen (2a, 2b; 2'a, 2'b; 2"a, 2"b), die Innenschuhe ((3a, 3b; 3c, 3d; 3'a, 3'b; 3'c 3'd; 3"a, 3"b; 3"c, 3"d) und die Ski (6, 6', 6") mittels Codes, Markierungen oder dergleichen einander zugeordnet sind.

9. Kombination nach einem der Ansprüche 1 bis 8, **dadurch gekennzeichnet, dass** die Markierungen (9, 9', 9", 10, 10', 10") Farbmarkierungen sind, wobei die Skischuhtypen (1, 1', 1") einer bestimmten Sohlenlänge (a, b, c) farblich derart markiert sind, dass diese Farbe mit der Farbe der Markierung(en) (9, 9', 9", 10, 10', 10") an der Führungseinrichtung (8a, 8b) der Bindung übereinstimmt, die dem passenden gegenseitigen Abstand der Backen entspricht.

## Claims

1. A combination of ski boots of various sizes and of skis with fitted bindings having a front jaw and a heel jaw, the relative distance of which is able to be altered and fixed relative to the ski by means of at least one guide device arranged on the ski, and with ski boots which belong to at least two ski boot types (1, 1' 1"), which differ from each other in the sole length (a, b, c) and with binding jaws (7a, 7b) arranged to be adjustable on the ski such that their relative distance is adaptable to the different lengths of sole (a, b, c), in which markings on the types of ski boot (1, 1', 1") and markings (9, 9', 9", 10, 10', 10") on the guide device (8a, 8b) of the binding permit a clear association of the sole length (a, b, c) to the matching jaw distance, **characterized in that**
for each ski boot type of a particular sole length (a, b, c) at least two shells of differing size are provided, into which respectively the inner shoes (3a to 3d, 3'a to 3'd, 3"a to 3"d) of one shoe size and the associated half size are able to be inserted.

2. The combination according to Claim 1, **characterized in that** it has at least three ski boot types (1, 1', 1").

3. The combination according to any of Claims 1 to 2, **characterized in that** several differently sized shells (2a, 2b; 2'a, 2'b; 2"a, 2"b) of the the same sole length (a, b, c) belong to each ski boot type (1, 1', 1").

4. The combination according to Claim 3, **characterized in that** two differently sized shells (2a, 2b; 2'a, 2'b; 2"a, 2"b) belong to each ski boot type (1, 1', 1").

5. The combination according to any of Claims 1 to 4, **characterized in that** several, in particular two shells (2a, 2b; 2'a, 2'b; 2"a, 2"b) of each shell size are present, which differ from each other internally such that respectively an inner shoe (3a, 3b; 3c, 3d; 3'a, 3'b; 3'c, 3'd; 3"a, 3"b; 3"c, 3"d) of a particular size is able to be inserted.

6. The combination according to Claim 5, **characterized in that** an inner shoe (3a, 3b; 3c, 3d; 3'a, 3'b; 3'c, 3'd; 3"a, 3"b; 3"c, 3"d) of a particular size fits into the one shell (2a, 2b; 2'a, 2'b; 2"a, 2"b) of the shells of the same size, and an inner shoe (3a, 3b; 3c, 3d; 3'a, 3'b; 3'c, 3'd; 3"a, 3"b; 3"c, 3"d) of the next or adjacent size fits into the other shell.

7. The combination according to any of Claims 1 to 6, **characterized in that** at least one of the shells (2a, 2b; 2'a, 2'b; 2"a, 2"b) of the same size is adapted by an inserted inlay or such like to an inner shoe (3a, 3b; 3c, 3d; 3'a, 3'b; 3'c, 3'd; 3"a, 3"b; 3"c, 3"d) of a smaller size.

8. The combination according to any of Claims 1 to 7, **characterized in that** the ski boot types (1, 1', 1") and their shells (2a, 2b; 2'a, 2'b; 2"a, 2"b), the inner shoes (3a, 3b; 3c, 3d; 3'a, 3'b; 3'c, 3'd; 3"a, 3"b; 3"c, 3"d) and the skis (6, 6', 6") are associated with each other by means of codes, markings or suchlike.

9. The combination according to any of Claims 1 to 8, **characterized in that** the markings (9, 9', 9", 10, 10', 10") are coloured markings, in which the ski boot types (1, 1', 1") of a particular sole length (a, b, c) are marked by colour such that this colour coincides with the colour of the marking (s) (9, 9', 9", 10, 10', 10") on the guide device (8a, 8b) of the binding, which corresponds to the matching relative distance of the jaws.

## Revendications

1. Association de chaussures de ski de différentes pointures et de skis avec des attaches montées, comportant une mâchoire avant et une mâchoire de talon, dont l'écart mutuel est susceptible d'être modifié et fixé sur le ski au moyen d'au moins un dispositif de guidage disposé sur le ski, et avec des chaussures de ski, appartenant à au moins deux types de chaussures de ski (1, 1', 1"), se distinguant l'un de l'autre par la longueur des semelles (a, b, c) et avec des mâchoires de liaison (7a, 7b) disposées sur le ski en étant réglables de sorte que leur écart mutuel soit adaptable aux différentes longueurs de semelles (a, b, c), des marquages sur les types de chaussures de ski (1, 1', 1") et des marquages (9, 9', 9", 10, 10',10") sur le dispositif de guidage (8a, 8b) de l'attache permettant une affectation indubitable de la longueur de la semelle (a, b, c) à l'écart adapté entre les mâchoires,
**caractérisée en ce que**, pour chaque type de chaussure d'une longueur de semelle (a, b, c) définie, sont prévues au moins deux coques de différentes pointures, dans chacune desquelles des chaussures intérieures (3a à 3d, 3'a à 3'd, 3"a à 3"d) d'une pointure de chaussure et de la demi pointure correspondante sont insérables.

2. Association selon la revendication 1, **caractérisée en ce qu'**elle comporte au moins trois types de chaussures (1, 1', 1").

3. Association selon l'une quelconque des revendications 1 à 2, **caractérisée en ce qu'**à chaque type de chaussure (1, 1', 1"), appartiennent deux coques de différentes pointures (2a, 2b ; 2'a, 2'b, 2"a, 2"b), d'une même longueur de semelle.

4. Association selon la revendication 3, **caractérisée en ce qu'**à chaque type de chaussure (1, 1', 1"), appartiennent deux coques de différentes pointures (2a, 2b ; 2'a, 2'b, 2"a, 2"b).

5. Association selon l'une quelconque des revendications 1 à 4, **caractérisée en ce que** de chaque pointure de coque, il existe plusieurs, notamment deux coques (2a, 2b ; 2'a, 2'b, 2"a, 2"b), qui à l'intérieur se distinguent l'une de l'autre de sorte que chaque fois une chaussure intérieure (3a, 3b, 3c, 3d ; 3'a, 3'b, 3'c, 3'd ; 3'a, 3'b ; 3'c, 3'd, 3"a, 3"b, 3"c, 3"d) d'une certaine pointure est insérable.

6. Association selon la revendication 5, **caractérisée en ce que** dans l'une des coques (2a, 2b ; 2'a, 2'b, 2"a, 2"b) des coques de même pointure s'adapte une chaussure intérieure 3a, 3b, 3c, 3d ; 3'a, 3'b, 3'c, 3'd ; 3'a, 3'b ; 3'c, 3'd, 3"a, 3"b, 3"c, 3"d) d'une certaine pointure et dans l'autre coque une chaussure intérieure (3a, 3b, 3c, 3d ; 3'a, 3'b, 3'c, 3'd ; 3'a, 3'b ; 3'c, 3'd, 3"a, 3"b, 3"c, 3"d) de la pointure suivante ou voisine.

7. Association selon l'une quelconque des revendications 1 à 6, **caractérisée en ce qu'**au moins l'une des coques (2a, 2b ; 2'a, 2'b, 2"a, 2"b) de même pointure est adaptée par une pièce intercalaire insérée ou similaire à une chaussure intérieure (3a, 3b, 3c, 3d ; 3'a, 3'b, 3'c, 3'd ; 3'a, 3'b ; 3'c, 3'd, 3"a, 3"b, 3"c, 3"d) de pointure plus petite.

8. Association selon l'une quelconque des revendications 1 à 7, **caractérisée en ce que** les types de chaussures de ski (1, 1', 1"), ainsi que leurs coques, (2a, 2b ; 2'a, 2'b, 2"a, 2"b), les chaussures intérieures (3a, 3b, 3c, 3d ; 3'a, 3'b, 3'c, 3'd ; 3'a, 3'b ; 3'c, 3'd, 3"a, 3"b, 3"c, 3"d) et les skis (6, 6', 6") sont mutuellement associés au moyen de codes, de marquages ou similaire.

9. Association selon l'une quelconque des revendications 1 à 8, **caractérisé en ce que** les marquages (9, 9', 9", 10, 10',10") sont des marquages de couleur, les types de chaussures de ski (1, 1', 1") d'une certaine longueur de semelle (a, b, c) étant marqués par couleur, de sorte que ladite couleur coïncide avec la couleurs des marquages (9, 9', 9", 10, 10',10") sur le dispositif de guidage (8a, 8b) de l'attache qui correspond à l'écart mutuel adapté des mâchoires.
